# EUROPEAN PATENT APPLICATION

(11) **EP 3 264 433 A1**
(43) Date of publication of application: **03.01.2018**
(21) Application number: 16176503.7
(22) Date of filing: 27.06.2016
(51) Int. Cl.: H01H 3/58, F16D 43/208, F16H 35/10, H02B 5/01, F16D 43/206

(54) **OVERLOAD CLUTCH FOR MEDIUM VOLTAGE SWITCHGEARS AND KINEMATIC CHAIN ARRANGEMENT FOR MEDIUM VOLTAGE SWITCHGEARS**

(71) Applicant: ABB Schweiz AG, 5400 Baden (CH)
(72) Inventor: Kopp, Dalibor, 40472 Düsseldorf (DE); Zitzmann, Robby, 40883 Ratingen (DE)
(74) Representative: Schmidt, Karl Michael

(57) **Abstract**

The invention relates to an overload clutch (100) for medium voltage switchgears, with a torque introducing cog or chain wheel (6), provided with near to the circumferential line arrangend balls (3), caught in openings of the cog or chain wheel (6) on one side, and caught in openings of a disc spring (2) on the opposing side, which couples by that the introducing torque to a shaft (1) and an kinematic chain arrangement for medium voltage switchgears, with mechanical coupling between a drive and the switching elements of switches, wherein torque overload is prevented by overload clutch. In order to overcome functional disadvantages in a very efficient way, the invention is, that the aforesaid shaft is connected torque proof with the disc spring, and that the disc spring is strained axially by an adjustable axial tension of the shaft with the cog or chain wheel.

## Description

The invention relates to an overload clutch for medium voltage switchgears, with a torque introducing cog or chain wheel, provided with near to the circumferential line arrangend balls, caught in openings of the cog or chain wheel on one side, and caught in openings of a disc spring on the opposing side, which couples by that the introducing torque to a shaft, according to the preamble of claims 1 and an kinematic chain arrangement for medium voltage switchgears, with mechanical coupling between a drive and the switching elements of switches, wherein torque overload is prevented by overload clutch, according to the preamble of claim 4.

Overload clutches for drives as such are well known.
It is intended, to prevent a mechanical overload of the drive, and/or the driven mechanical construction in the kinematic chain. This is realized by a torque limiting element in the aforesaid kinematic chain. If mechanically or electromechnically introduced torques will reach a predefined limit, the mechanical coupling in the kinematic chain will be released by the torque limiter.

In GB 979 487 Patent specification a torque limiting device is disclosed, which consist of a first rotatively driven shaft, which is coupled to a second shaft via a pair of tappet plates, which will transmit the torque via balls, which are trapped in two opposing openings in the opposing tappet plates.

The balls diameters and the diameters of the aforesaid openings in the tappet plates are dimensioned in such, that dependant to an axially introduced force, the balls will skip out of the openings, and release the mechanical rotative coupling if a predefined torque will be trespassed.

Such torque limitators are also used for switchgears, especially in medium voltage use.

In medium voltage switchgears, such torque limiters are located at different points of the kinematic chain. So for example for a three position switch a torque limiter is arranged at the motor drive, one further torque limiter at the earther, and third one at the disconnector.

So the object of the invention is, to overcome this disadvantage in an effective way, and to reduce the number of needed torque limiters by constructive development.

Regarding an overload clutch for medium voltage switchgears, the invention is that the aforesaid shaft is connected torque proof with the disc spring, and that the disc spring is strained axially by an adjustable axial tension of the shaft with the cog or chain wheel.
This differs from the state of the art, because the adjustment of the preforce of the spring is realized by adjustment of the axial tension between the cog or chain wheel and the shaft. By that, the torque limit can be adjusted in an effective and simple way.

In a further advantageous embodiment, the overload clutch is used in case of a used motor drive as well as in use of a manual drive.

Furthermore advantageous is, that the common overload clutch is implemented in a medium voltage three position switch.

Regarding a kinematic chain in which such overload cluth is implementable, the invention is, that for a plurality of switching elements only one common overload clutch is arranged in a coupled kinematic chain arrangement. This reduces the constructive complexity. By that also the fault liability is reduced.

From that point of view, several alternatives for positioning the overload cluch are possible. So the common overload clutch is gradually engaged between the motor drive and the earther switch, and the motor drive and the disconnector switch, or in a common coupling with both.

In a further advantageous embodiment, the common overload clutch is gradually engaged between the motor drive and the earther switch, and the motor drive and the disconnector switch, or in a common coupling with both, and coupled with an external manual drive interface via a jackshaft.

An embodiment of the invention is shown in the drawings.
Figure 1: Overload cluth
Figure 2: Kinematic chain and local position of the overload clutch
Figure 3: State of the art for an overload clutch
Figure 4: State of the art for a kinematic chain

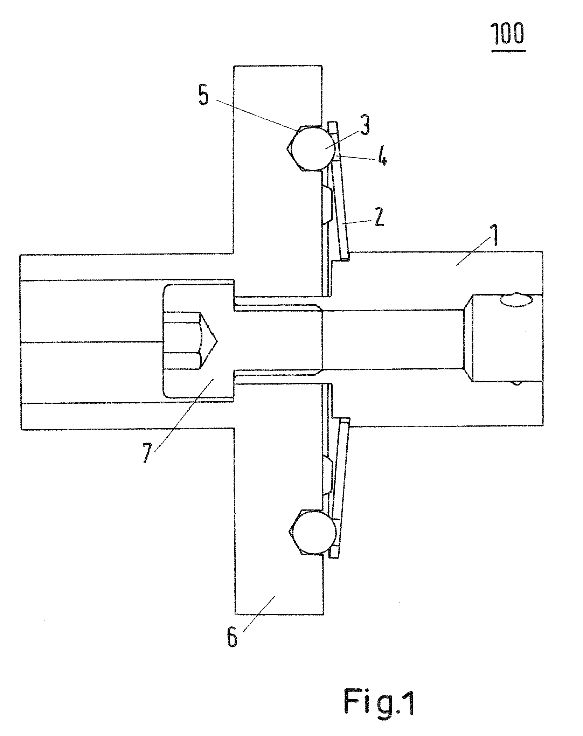

Figure 1 shows a detailed view at the overload clutch 1.
A chain wheel 6 is coupled with the left sided continuation of the central shaft. On the opposing side, a shaft 1 is mechanically coupled to a disc spring 2. The disc spring 2, as well as the chain wheel 6 has opposing openings 4 and 5, in which balls 3 are positioned in, as such, that the balls 3 realizes the torque transmission.

The axial tension introduces a spring force into the disc spring 2. Because of that, the value of the introduced tension force limits the transmittable torque. The overstepping of that defined torque release the coupling, by skipping the balls 5 out of the positioning in the openings 3 of the disc spring 2.

By the use of an axial tension element in form of a screw 7, the preconditioning spring constant can be adjusted, and by that the resulting torque release point. The screw 7 is positioned tight to an undercut or a back tapper at the rear side of the chain wheel.

The torque will then be transmitted from the right side of the shaft 1, to a shaft, fixed to the chain wheel on the left side.

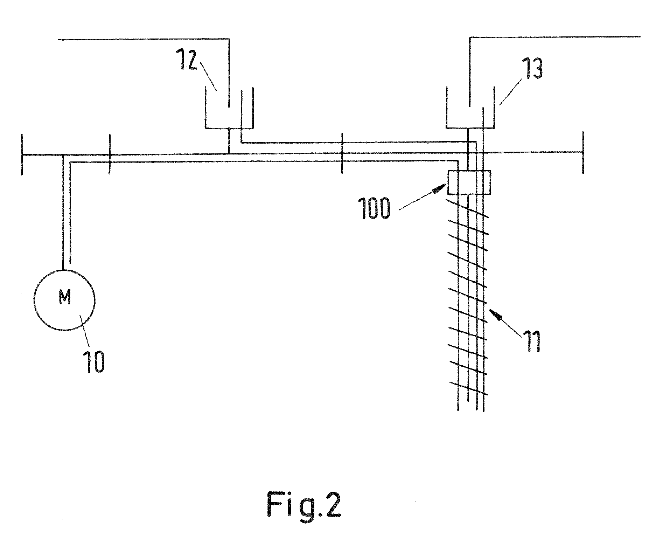

Figure 2 shows the kinematic chain and local position of the overload clutch 1 (torque limiter). The motor drive 10 and the manual drive 11 are commonly coupled to the kinematic chain. The overload clutch 100 (torque limiter) is positioned and linked to the kinematic chain in such, that only one torque limiter 100 is needed. This is the linked to the earther 12 as well as to the disconnector 13.

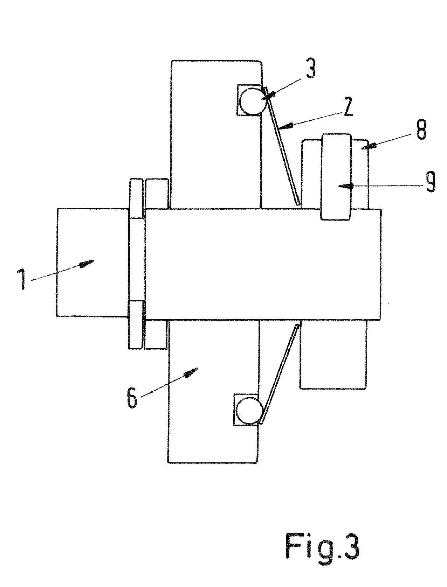

Figure 3 shows an overload clutch (torque limiter), which is well known from the state of the art. There is a fixed dimensioned coupling between the chain wheel 6 and the coupling elements 8 and 9, via the disc spring 2.
There is no possibility to adjust the torque momentum.

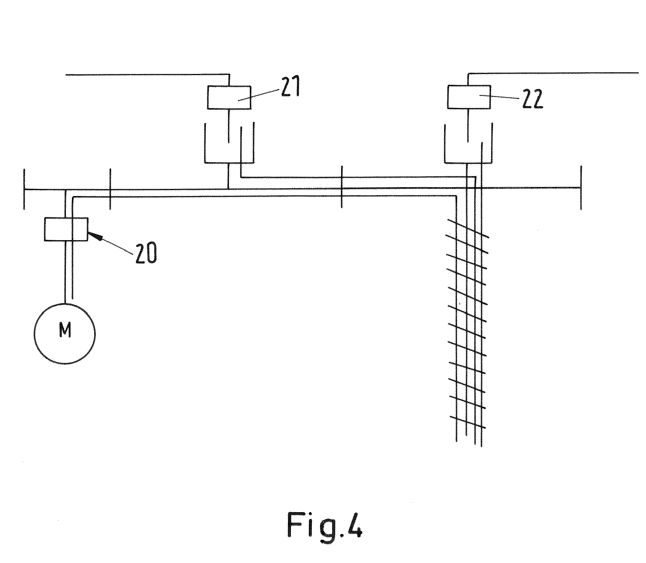

Figure 4 shows a kinematic chain, realized in the known state of the art. Several overload clutches are needed, here a number of three overload clutches 20, 21, and 22.
A first one linked at the motor drive, and second one linked at the earther, and a third one linked at the disconnector separately.

Referring to that state of the art, the invention only uses one single overload clutch, which is then mechanically coupled to the complete kinematic chain.

### Numbering

- 1: shaft
- 2: Disc spring
- 3: Ball
- 4: Opening in spring disc
- 5: Opening in cog or chain wheel
- 6: Cog or chain wheel
- 7: Axial tension element
- 8: Coupling element, state of the art
- 9: Coupling element, state of the art
- 10: Motor drive
- 11: Manual drive
- 12: Earther
- 13: Disconnector
- 20: Torque limiter, state of the art
- 21: Further torque limiter, state of the art
- 22: Further torque limiter, state of the art

- 100: torque limiter

## Claims

1. Overload clutch for medium voltage switchgears, with a torque introducing cog or chain wheel, provided with near to the circumferential line arrangend balls, caught in openings of the cog or chain wheel on one side, and caught in openings of a disc spring on the opposing side, which couples by that the introducing torque to a shaft, **characterized in**
**that** the aforesaid shaft (1) is connected torque proof with the disc spring (2), and that the disc spring (2) is strained axially by an adjustable axial tension of the shaft (1) with the cog or chain wheel (6).

2. Overload clutch, according to claim 1,
**characterized in**
**that** the overload clutch (100) is used in case of a used motor drive as well as a manual drive.

3. Overload clutch, according to claim 1 or 2,
**characterized in**
**that** the common overload clutch (100) is implemented in a medium voltage three position switch.

4. Kinematic chain arrangements for medium voltage switchgears, with mechanical coupling between a drive and the switching elements of switches, wherein torque overload is prevented by overload clutch, especially according to claim 1 or 2 or 3,
**characterized in**
**that** for a plurality of switching elements only one common overload clutch is arranged in a coupled kinematic chain arrangement.

5. Kinematic chain arrangement according to claim 4,
**characterized in**
**that** the common overload clutch is gradually engaged between the motor drive and the earther switch, and the motor drive and the disconnector switch, or in a common coupling with both.

6. Kinematic chain arrangement according to claim 4 or 5, **characterized in**
**that** the that the common overload clutch is gradually engaged between the motor drive and the earther switch, and the motor drive and the disconnector switch, or in a common coupling with both, and coupled with an external manual drive interface via a jackshaft.
